# EUROPÄISCHE PATENTSCHRIFT

(11) **EP 2 366 616 B1**
(45) Veröffentlichungstag und Bekanntmachung des Hinweises auf die Patenterteilung: **03.07.2013**
(21) Anmeldenummer: 11158608.7
(22) Anmeldetag: 17.03.2011
(51) Int. Cl.: B62M 3/08

(54) **Fahrradpedal**
Bicycle pedal
Pédale de vélo

(30) Priorität: 18.03.2010 DE 202010003827 U
(43) Veröffentlichungstag der Anmeldung: 21.09.2011
(73) Patentinhaber: RTI Sports Vertrieb von Sportartikeln GmbH, 56070 Koblenz (DE)
(72) Erfinder: Arnold, Franc, 56068 Koblenz (DE); Stölting, Dirk, 56070 Koblenz (DE); Tofaute, Kim, 56112 Lahnstein (DE)
(74) Vertreter: von Kreisler Selting Werner

(56) Entgegenhaltungen:
- CH-A- 290 481
- FR-A1- 2 407 120
- US-A- 3 592 076
- US-A- 3 807 255
- US-A- 4 700 588
- US-A- 5 199 324
- US-B2- 6 647 826

## Beschreibung

Die Erfindung betrifft ein Fahrradpedal.

Um eine gute und gleichmäßige Kraftübertragung auf das Fahrradpedal zu gewährleisten, muss die Lage des Fußes relativ zum Pedal, insbesondere zur Pendelachse, definiert sein. Dies wird bei bekannten Fahrradpedalen, die insbesondere bei Sporträdern verwendet werden durch so genannte Klick-Pedale, realisiert. Hierbei ist an der Schuhsohle ein Rastelement vorgesehen, das mit einem am Pedalkörper vorgesehen Rastelement zusammenwirkt. Das Pedalsystem weist den Nachteil auf, dass spezielle Schuhe verwendet werden müssen. Aufgrund des vorstehenden Rastelements an der Schuhsohle sind diese Schuhe ferner zum Gehen ungeeignet. Ein weiterer Nachteil von Klick-Pedalen besteht darin, dass besonders für den ungeübten Benutzer die Gefahr besteht, den Fuß nicht rechtzeitig aus dem Pedal lösen zu können Dies kann beispielsweise beim Anhalten oder in Gefahrensituationen zu Stürzen führen. Klick.-Pedale haben sich daher nur im Sportbereich durchgesetzt. Insbesondere für Stadträder, Trekkingräder oder dergleichen sind Klick-Pedale ungeeignet.

Herkömmliche Pedale weisen den Nachteil auf, dass die Stellung des Fußes auf dem Pedal nicht definiert ist. Dies führt dazu, dass die Kraftübertragung beeinträchtigt ist. Insbesondere können durch derartige Fehlstellungen erhebliche Belastungen der Gelenke auftreten, Insbesondere durch ein Drehen der Ferse nach außen oder innen, treten ungünstige Belastungen im Kniegelenk sowie auch im Hüftgelenk auf.

Ferner wird der Fuß in Pedallängsrichtung, d.h. in Fahrtrichtung häufig zu weit nach vorne gesetzt. Dies führt dann dazu, dass die Kraftübertragung nicht im Bereich des Fußballens bzw. des Großzehengelenks erfolgt, obwohl hier die effektivste Kraftübertragung gegeben wäre.

Aus FR 2 407 120 ist ein asymmetrisch aufgebautes Fahrradpedal bekannt. Dieses in Seitenansicht einen V-förmigen Querschnitt aufweisende Pedal weist an der Pedalrückseite einen in einem Winkel zu dem Pedal angeordneten Ansatz auf.

Aufgabe der Erfindung ist es, ein Fahrradpedal zu schaffen, bei dem die Lage des Fußes relativ zu dem Pedal auch bei einer nicht festen Verbindung zwischen Schuh und Pedal verbessert ist.

Die Lösung der Aufgabe erfolgt erfindungsgemäß durch die Merkmale des Anspruchs 1.

Das erfindungsgemäße Fahrradpedal ist derart ausgebildet, dass keine feste Verbindung zwischen einer Schuhsohle und dem Pedal erfolgt. Insbesondere sind keine Rastelemente oder dergleichen wie bei Klick-Pedalen vorgesehen. Das Fahrradpedal weist einen vorzugsweise aus Kunststoff hergestellten Pedalkörper auf. Der Pedalkörper bildet eine Aufstandfläche für den Schuh. Üblicherweise weist der Pedalkörper zwei einander gegenüber liegende Aufstandflächen auf, so dass der Fuß unabhängig von der Stellung des Pedals aufgesetzt werden kann. Der Pedalkörper ist durch eine Pedalachse drehbar gehalten, wobei die Pedalachse üblicherweise in eine Gewindebohrung der Tretkurbel einschraubbar ist.

Erfindungsgemäß weist die mindestens eine Aufstandfläche eine Vertiefung auf. Die Vertiefung erstreckt sich über die gesamte Breite des Pedals, d. h. von einer in Richtung der Tretkurbel weisenden Innenseite des Pedalkörpers bis zu einer gegenüberliegenden Außenseite des Pedalkörpers. Die Vertiefung kann beispielsweise entsprechend einer Senke oder Rinne mit großem Radius ausgebildet sein. Ebenso kann die Vertiefung keilförmig ausgebildet sein, wobei sich beispielsweise ausgehend von einer Vorderseite sowie einer Hinterseite der Aufstandfläche geneigte Ebenen erstrecken, die sodann die Vertiefung ausbilden. Erfindungsgemäß weist die Vertiefung einen tiefsten Bereich auf. Dieser erstreckt sich vorzugsweise über die gesamte Pedalbreite. Es handelt sich bei dem tiefsten Bereich somit insbesondere um eine Art Tal - oder Senkengrund. Erfindungsgemäß ist dieser tiefste Bereich der Vertiefung gegenüber der Pedalachse, d. h. einer Mittellinie der Pedalachse um die das Pedal drehbar ist, versetzt angeordnet.

Durch das erfindungsgemäße Vorsehen einer derartigen Vertiefung, wird der Fuß eines Fahrradfahrers intuitiv besser auf dem Pedal positioniert. Zunächst erfolgt kein Treten mehr mit dem Mittelfuß, da die Fuß- bzw. Schuhsohle nicht mehr flächig auf dem Pedal aufliegt, sondern nur an der Vorder- und Rückseite die Aufstandfläche des Pedals berühren würde. Der Benutzer schiebt den Fuß intuitiv nach hinten, da der Schuh und der Fuß im Bereich der Zehengelenke gekrümmt werden kann, sodass der Schuh wieder flächig auf dem Pedal aufliegt. Das Vorsehen einer Vertiefung wie einer Senke hat somit den ersten Vorteil, dass der Benutzer den Fuß, derart auf dem Pedal positioniert, dass die Kraftübertragung im Wesentlichen über den Fußballen, bzw. die Zehengrundgelenke erfolgt. Da der tiefste Bereich der Vertiefung erfindungsgemäß zu der Pedalachse versetzt ist, wird der Fuß ferner intuitiv, entsprechend der Versetzung auf dem Pedal angeordnet. Dies führt zu einer ergonomisch besseren Fußstellung. Durch ein entsprechendes Anordnen des tiefsten Bereichs der Vertiefung wird verhindert, dass die Ferse des Fußes zu weit nach außen oder zu weit nach innen gedreht wird. Durch die ergonomisch verbesserte Anordnung des Fußes auf dem Pedal, werden die insbesondere im Sprunggelenk und dem Kniegelenk aber auch die im Hüftgelenk auftretenden Belastungen verringert.

Erfindungsgemäß ist die Vertiefung derart ausgebildet, dass eine Mittellinie des tiefsten Bereichs mit der Pedalachse einen Winkel ≠ 0 ° einschließt. Insbesondere liegt der Winkelbereich bei 5-15 ° und besonders bevorzugt bei 5-10 °. Hierbei erstreckt sich vorzugsweise die Mittellinie über die gesamte Breite des Pedals und verläuft im Wesentlichen annähernd quer zur Fahrtrichtung. Die Pedalachse, bzw. die Mittellinie der Pedalachse, verläuft hierbei exakt quer zur Fahrtrichtung. Die Mittellinie des tiefsten Bereichs schließt zu dieser Linie dann einen entsprechenden Winkel ein. Hierbei ist es bevorzugt, dass die Mittellinie des tiefsten Bereichs gegenüber der Pedalachse entgegen der Fahrtrichtung geneigt ist. In bevorzugter Ausführungsform befindet sich hierbei der Schnittpunkt, zwischen der Pedalachse und der Mittellinie des tiefsten Bereichs, im Bereich der Innenseite des Pedalkörpers

Besonders bevorzugt ist die Vertiefung derart ausgestaltet, dass sie keine Stufen aufweist, sondern insbesondere kontinuierlich verläuft, Die Aufstandfläche kann hierdurch glatt ausgebildet werden. Insbesondere nimmt die Tiefe der Vertiefung, ausgehend von einer Rückseite der Aufstandfläche zum tiefsten Bereich der Vertiefung kontinuierlich zu. Besonders bevorzugt ist es, ausgehend vom tiefsten Bereich der Vertiefung zur Vorderseite der Aufstandfläche, dass die Tiefe kontinuierlich abnimmt. Um die Position des Fußes weiter zu verbessern und zu vermeiden, dass der Benutzer den Fuß geringfügig zu weit nach vorne auf dem Pedal aufsetzt, kann die Steigung, ausgehend von dem tiefsten Bereich der Vertiefung zur Vorderseite der Aufstandfläche ggf etwas steiler, bzw. stärker verlaufen als im hinteren Bereich.

Die Tiefe der Vertiefung ist vorzugsweise über die gesamte Pedalbreite im Wesentlichen konstant. Gegebenenfalls kann die Vertiefung im äußeren Bereich der Aufstandfläche etwas geringer ausfallen, sodass der Fuß leicht nach innen gedrückt, bzw gehalten wird. Hierdurch ist sichergestellt, dass der Fuß möglichst nah an der Tretkurbel auf das Pedal aufgesetzt wird.

Vorzugsweise handelt es sich bei dem erfindungsgemäßen Pedal um ein Pedal mit zueinander gegenüberliegenden Aufstandflächen. Diese sind vorzugsweise identisch ausgebildet, sodass der Benutzer nicht darauf achten muss, auf welche der beiden Seiten er den Fuß aufsetzt. Es ist jedoch beispielsweise auch ein Kombinationspedal möglich, das auf der einen Seite als Klick-Pedal und auf der anderen Seite als erfindungsgemäß ausgestaltetes Pedal mit Vertiefung ausgebildet ist, Ein derartiges Pedal kann somit einerseits mit speziellen Schuhen, beispielsweise mit Klick-Verbindung genutzt werden und stellt andererseits auch bei der Verwendung herkömmlicher Schuhe beim Auftreten auf die erfindungsgemäß ausgebildete Aufstandfläche eine ergonomisch gute Haltung des Fußes sowie eine gute Kraftübertragung sicher.

Die Vertiefung weist im tiefsten Bereich gegenüber der Rückseite der Aufstandsfläche und/oder der Vorderseite der Aufstandfläche vorzugsweise eine Tiefe von 1-4 mm insbesondere 2-3 mm auf.

Die Haltung des Fußes kann weiter verbessert werden, indem die Aufstandfläche nach außen, d. h. weg von der Tretkurbel fallend, ausgebildet ist. Bei einer derart geringen Neigung entsteht der Effekt eines sog. Varus-Keils. Dies hat positive Auswirkungen auf die Stellung des Fußgelenks. Die Neigung an der Aufstandfläche gegenüber der horizontalen Fläche beträgt vorzugsweise 1-3 ⁰ insbesondere ca. 1,5 °.

Nachfolgend wird die Erfindung anhand einer bevorzugten Ausführungsform unter Bezugnahme auf die anliegenden Zeichnungen näher erläutert.

Es zeigen :
- Fig. 1: eine schematische Draufsicht des erfindungsgemäßen Fahrradpedals,
- Fig. 2: eine schematische Draufsicht des in Figur 1 dargestellten Fahrradpedal, wobei zusätzlich ein Fuß angedeutet ist,
- Fig. 3: eine Seitenansicht des Pedals in Richtung des Pfeils III in Figur 1,
- Fig. 4: eine Seitenansicht des Pedals in Richtung des Pfeils IV in Figur 1.

Das Fahrradpedal weist einen Pedalkörper 10 auf. Der Pedalkörper 10 ist im dargestellten Ausführungsbeispiel mit zwei Aufstandflächen 12 versehen, sodass sowohl die Oberseite als auch die Unterseite des Pedalkörpers identisch ist. Innerhalb des Pedalkörpers ist in einem zylindrischen Hohlraum eine Pedalachse 14 angeordnet, um die sich der Pedalkörper 10 dreht. Die Pedalachse 14 ist derart angeordnet, dass eine Mittellinie 16 der Pedalachse 14 senkrecht zu einer nicht dargestellten Tretkurbel verläuft, Die Befestigung des Pedals in der Tretkurbel erfolgt über den zylindrischen Ansatz 18 der Pedalachse 14, der mit einem Gewinde versehen ist.

Die Aufstandflächen 12 des Pedalkörpers 10 weisen eine Vertiefung 20 auf, wobei die Vertiefung 20 in dem dargestellten Ausführungsbeispiel, durch eine konkave Ausgestaltung der Aufstandflächen 12 ausgebildet sind. Der Pedalkörper 10 ist somit derart ausgebildet, dass, ausgehend von einer Vorderseite 22 der Aufstandsfläche 12, eine konkave Ausgestaltung der Oberfläche derart vorgenommen ist, dass die Vertiefung in Richtung des tiefsten Bereichs 20 zunimmt. Ausgehend von dem tiefsten Bereich 20 in Richtung einer Rückseite 24 nimmt die Tiefe der Vertiefung sodann wieder ab. Der tiefste Bereich 20 stellt somit eine Art Senke dar. Da die konkave Ausgestaltung der Aufstandfläche 12 derart ausgebildet ist, dass sie über die gesamte Pedalbreite, d. h. von einer Pedalinnenseite 36 bis zu einer Pedalaußenseite 38 stets konstant ist, d. h. die Tiefe der Vertiefung stets über die gesamte Pedalbreite gleich ist, kann der tiefste Bereich 20 durch eine Mittellinie 26 definiert werden. Erfindungsgemäß weist die Mittellinie 26 gegenüber der Pedalachse 16 einen Winkel α auf. Der Winkel α beträgt vorzugsweise 5-10 ⁰. Bezogen auf eine Fahrtrichtung 28 ist die Mittellinie 26 nach hinten geneigt,

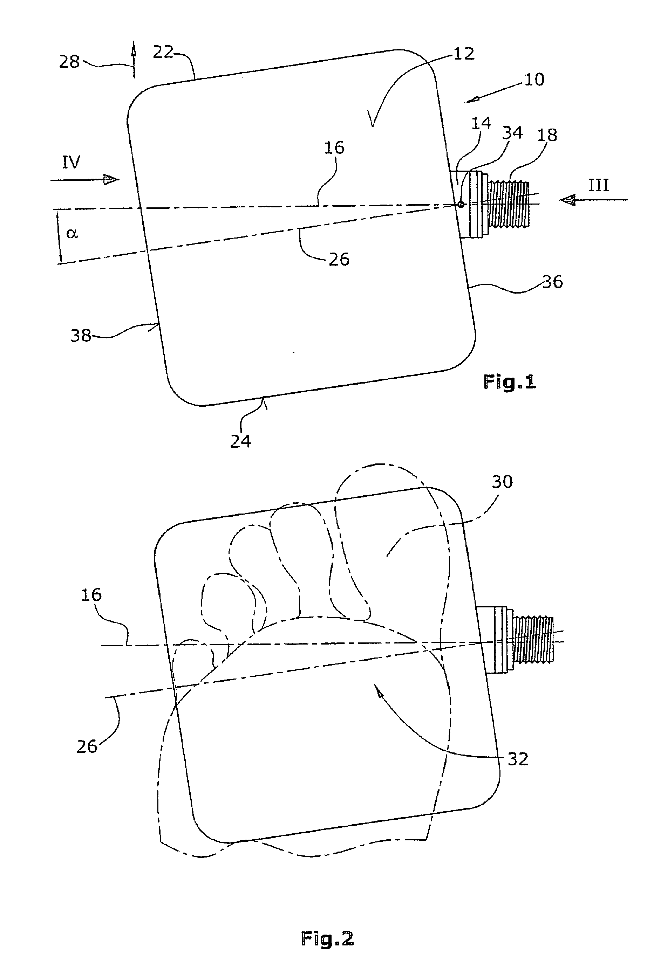

In dem dargestellten Ausführungsbeispiel ist der Pedalkörper 10 in sich symmetrisch ausgebildet, sodass der Pedalkörper 10 aus einer herkömmlichen Stellung, in der sich die beiden Mittellinien 16, 26 decken würden, in Figur 1 im Gegenuhrzeigersinn um den Winkel α gedreht ist. Selbstverständlich kann der Pedalkörper auch unsymmetrisch ausgebildet sein, um beispielsweise im Bereich der großen Zehe 30 eine ausreichende Aufstandfläche zu gewährleisten.

Durch das Vorsehen einer Vertiefung 20, bzw. einer Senke deren tiefster Bereich 26 gegenüber der Pedalachse 16 versetzt, bzw. geneigt ist, ist die Fußstellung verbessert. Ein Fahrradfahrer wird bei Verwendung des erfindungsgemäßen Pedals den Fuß intuitiv wie in Figur 2 skizziert anordnen. Einerseits wird der Fuß somit derart angeordnet, dass die Kraftübertragung nicht über den Mittelfuß, sondern über einen Fußballen-Bereich 32 erfolgt. Mit anderen Worten erfolgt die Kraftübertragung, die insbesondere im Vergleich zur Mittellinie 26 erfolgt, über Bereiche des Fußes, in dem die Zehengrundgelenke angeordnet sind. In diesem Bereich ist die größte Kraftübertragung möglich. Aufgrund der Neigung, bzw. des Versatzes der Mittellinie 26 gegenüber der Pedalachse 16 ist eine ergonomisch vorteilhafte Stellung des Fußes gewährleistet. Der Benutzer neigt weniger dazu die Ferse zu weit nach außen oder innen zu drehen, was insbesondere zu Belastungen der Kniegelenke führen würde.

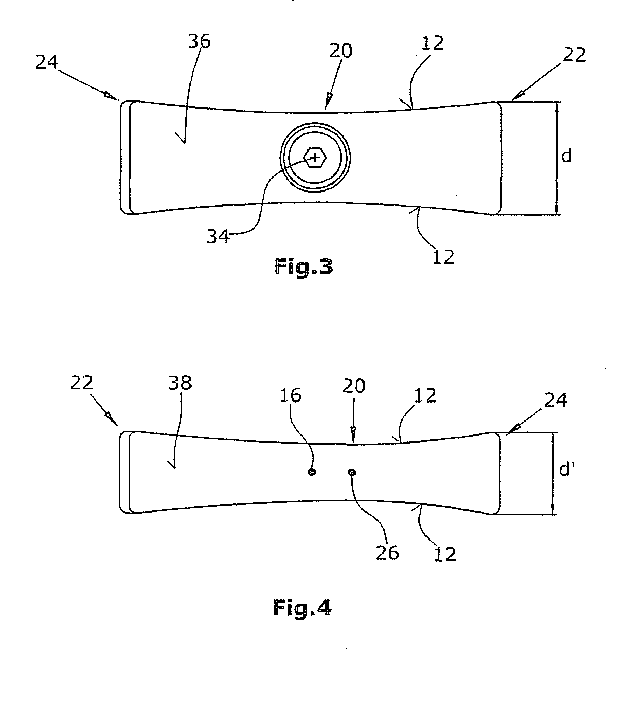

Im dargestellten Ausführungsbeispiel schneiden sich die Pedalachse 16 und die Mittellinie 26 in einem Schnittpunkt 34 der im Bereich einer Innenseite 36 des Pedalkörpers 10 liegt. Ausgehend von dem Schnittpunkt 34 nimmt der Abstand zwischen den beiden Linien 16, 26 in Richtung der Außenseite 38 des Pedalkörpers 10 zu, sodass diese an der Außenseite den aus Figur 4 ersichtlichen Abstand aufweisen. Der tiefste Bereich 20 ist hierbei stets durch die Mittellinie 26 verdeutlicht. Ein Vergleich der Figuren 3 und 4 zeigt somit eindeutig, dass der tiefste Bereich, ausgehend von der Innenseite 36 zur Außenseite 38 des Pedalkörpers 10, nach hinten, d. h. in entgegengesetzter Richtung zur Fahrtrichtung 28, wandert.

Ein weiteres Merkmal des in den Figuren dargestellten Fahrradpedals besteht darin, dass die Dicke, ausgehend von der Innenseite 36 des Pedalkörpers zu der Außenseite 38 des Pedalkörpers, abnimmt. Im Bereich der Innenseite 36 weist der Pedalkörper 10 eine Dicke d und im Außenbereich der Außenseite 38 eine geringere Dicke d' auf.

## Patentansprüche

1. Fahrradpedal, mit
einem eine Aufstandfläche (12) aufweisenden Pedalkörper (10) und
einer den Pedalkörper (10) drehbar haltenden Pedalachse (14),
wobei die Aufstandfläche (12) eine sich im Wesentlichen über die gesamte Pedalbreite erstreckende Vertiefung aufweist, deren tiefster Bereich (20) gegenüber der Pedalachse (16) versetzt ist,
**dadurch gekennzeichnet, dass**,
eine Mittellinie (26) des tiefsten Bereichs (20) mit der Pedalachse einen Winkel von vorzugsweise 5 bis 15° einschließt.

2. Fahrradpedal nach Anspruch 1, **dadurch gekennzeichnet, dass** die Mittellinie (26) des tiefsten Bereichs (20) mit der Pedalachse einen Winkel von 5 bis 10° einschließt.

3. Fahrradpedal nach Anspruch 1 oder 2, **dadurch gekennzeichnet, dass** die Tiefe der Vertiefung, ausgehend von einer Rückseite (24) der Aufstandfläche (12) zum tiefsten Bereich (20) insbesondere kontinuierlich zunimmt und vorzugsweise, ausgehend vom tiefsten Bereich (20) zu einer Vorderseite (22) der Aufstandfläche, insbesondere kontinuierlich abnimmt.

4. Fahrradpedal nach einem der Ansprüche 1 bis 3, **dadurch gekennzeichnet, dass** die Tiefe der Vertiefung (20) über die Pedalbreite im Wesentlichen konstant ist.

5. Fahrradpedal nach einem der Ansprüche 1 bis 4, **dadurch gekennzeichnet, dass** die Vertiefung (20) konkav ausgebildet ist und sich vorzugsweise von der Rückseite (24) der Aufstandfläche (12) bis zur Vorderseite (22) der Aufstandfläche erstreckt.

6. Fahrradpedal nach einem der Ansprüche 1 bis 5, **dadurch gekennzeichnet, dass** das Fahrradpedal zwei einander gegenüberliegende, identisch ausgebildete Aufstandflächen (12) aufweist.

7. Fahrradpedal nach einem der Ansprüche 1 bis 6, **dadurch gekennzeichnet, dass** der tiefste Bereich (20) gegenüber der Rückseite (24) und/oder der Vorderseite (22) der Aufstandfläche (12) eine Tiefe von 1 bis 4 mm, insbesondere 2 bis 3 mm aufweist.

8. Fahrradpedal nach einem der Ansprüche 1 bis 7, **dadurch gekennzeichnet, dass** die Aufstandfläche (12) des Pedalkörpers (10) von einer Innenseite (36) zu einer Außenseite (38), insbesondere im tiefsten Bereich (20) der Vertiefung, vorzugsweise kontinuierlich fallend geneigt ist.

## Claims

1. A bicycle pedal comprising
a pedal body (10) having a support surface (12) and
a pedal axle (14) rotatably supporting the pedal body (10),
wherein the support surface (12) has a recess extending substantially across the entire width of the pedal, the deepest portion (20) of the recess being offset from the pedal axis (16),
**characterized in that**
a centre line (26) of the lowest portion (20) includes an angle of preferably 5 to 15° with the pedal axis.

2. The bicycle pedal of claim 1, **characterized in that** a center line (26) of the deepest portion (20) includes an angle of preferably 5 to 15°, in particular 5 to 10°, with the pedal axis.

3. The bicycle pedal of claim 1 or 2, **characterized in that** the depth of the recess increases, in particular continuously, starting from a rear side (24) of the support surface (12) to the deepest portion (20), and preferably decreases, in particular continuously, starting from the deepest portion (20) to a front side (22) of the support surface.

4. The bicycle pedal of one of claims 1 to 3, **characterized in that** the depth of the recess (20) is substantially constant across the width of the pedal.

5. The bicycle pedal of one of claims 1 to 4, **characterized in that** the recess (20) is concave and preferably extends from the rear side (24) of the support surface (12) to the front side (22) of the support surface.

6. The bicycle pedal of one of claims 1 to 5, **characterized in that** the bicycle pedal comprises two opposite support surfaces (12) of identical design.

7. The bicycle pedal of one of claims 1 to 6, **characterized in that** the deepest portion (20) has a depth of 1 to 4 mm, in particular 2 to 3 mm, with respect to the rear side (24) and/or the front side (22) of the support surface (12).

8. The bicycle pedal of one of claims 1 to 7, **characterized in that** the support surface (12) of the pedal body (10) is inclined, in particular continuously, downward from an inner side (36) to an outer side (38), especially in the deepest portion (20) of the recess.

## Revendications

1. Pédale de bicyclette comprenant
un corps de pédale (10) qui présente une surface d'appui (12), et
un axe de pédale (14) qui supporte le corps de pédale (10) de façon pivotante,
la surface d'appui (12) présentant un évidement qui s'étend sensiblement sur toute la largeur de la pédale et dont la région la plus profonde (20) est décalée par rapport à l'axe (16) de la pédale,
**caractérisée en ce que**
une ligne médiane (26) de la zone la plus profonde (20) forme un angle de préférence de 5 à 15° avec l'axe de la pédale.

2. Pédale de bicyclette selon la revendication 1, **caractérisée en ce que** la ligne médiane (26) de la région la plus profonde (20) forme un angle de 5 à 10° avec l'axe de la pédale.

3. Pédale de bicyclette selon la revendication 1 ou 2, **caractérisée en ce que** la profondeur de l'évidement croît, en particulier continuellement, d'un côté arrière (24) de la surface d'appui (12) jusqu'à la région la plus profonde (20), et décroît, en particulier continuellement, de préférence de la région la plus profonde (20) jusqu'à un côté avant (22) de la surface d'appui.

4. Pédale de bicyclette selon l'une des revendications 1 à 3, **caractérisée en ce que** la profondeur de l'évidement (20) est sensiblement constante sur la largeur de la pédale.

5. Pédale de bicyclette selon l'une des revendications 1 à 4, **caractérisée en ce que** l'évidement (20) est de forme concave et s'étend de préférence du côté arrière (24) de la surface d'appui (12) jusqu'au côté avant (22) de la surface d'appui.

6. Pédale de bicyclette selon l'une des revendications 1 à 5, **caractérisée en ce que** la pédale de bicyclette présente deux surfaces d'appui opposées (12), de forme identique.

7. Pédale de bicyclette selon l'une des revendications 1 à 6, **caractérisée en ce que** la région la plus profonde (20) présente, par rapport au côté arrière (24) et/ou au côté avant (22) de la surface d'appui (12), une profondeur de 1 à 4 mm, en particulier de 2 à 3 mm.

8. Pédale de bicyclette selon l'une des revendications 1 à 7, **caractérisée en ce que** la surface d'appui (12) du corps (10) de la pédale est inclinée, de préférence continuellement en pente descendante, d'un côté intérieur (36) à un côté extérieur (38), en particulier dans la région la plus profonde (20) de l'évidement.
